# EUROPEAN PATENT SPECIFICATION

(11) **EP 2 766 424 B1**
(45) Date of publication and mention of the grant of the patent: **05.07.2017**
(21) Application number: 12772232.0
(22) Date of filing: 05.10.2012
(51) Int. Cl.: C08L 5/08, A61K 31/728, C08J 3/075, C08K 3/00

(54) **SYNTHESIS OF AN INJECTABLE MULTIPHASIC GEL CONTAINING FREE AND CROSS-LINKED MONOPHASIC HYALURONIC ACID AND BIPHASIC HYALURONIC ACID COMBINED WITH HYDROXYAPATITE WITH MICROENCAPSULATED HYALURONIDASE INHIBITOR.**
HERSTELLUNG EINES INJIZIERBAREN MULTIPHASISCHEN GELS AUS FREIER UND AUS KREUZVERNETZTER MONOPHASISCHER HYALURONSÄURE UND AUS MIT HYDROXYAPATIT UND MIKROEINGEKAPSELTEM HYALURONIDASEINHIBITOR KOMBINIERTER BIPHASISCHER HYALURONSÄURE
PROCEDE DE PREPARATION DE GELS MULTIPHASIQUE INJECTABLES COMPRENANT ACIDE HYALURONIQUE LIBRE, ACIDE HYALURONIQUE MONOPHASIQUE RÉTICULÉ, HYDROXYAPATITE, ET UN INHIBITEUR DE L'HYALURONIDASE MICROENCAPSULÉS COMBINÉ Á BIPHASIQUE ACIDE HYALURONIQUE.

(30) Priority: 12.10.2011 IT AN20110138
(43) Date of publication of application: 20.08.2014
(73) Proprietor: Regenyal Laboratories S.r.l., 63039 San Benedetto del Tronto (AP) (IT)
(72) Inventor: ZAZZETTA, Marco, I-63076 Monteprandone (AP) (IT)
(74) Representative: Statti, Francesco
(86) International application number: PCT/EP2012/004215
(87) International publication number: WO 2013/053457

(56) References cited:
- WO-A1-2005/051446
- WO-A2-2006/020994
- US-A1- 2006 040 894
- US-A1- 2011 171 286
- TIMOTHY CORCORAN FLYNN ET AL: "Comparative Histology of Intradermal Implantation of Mono and Biphasic Hyaluronic Acid Fillers", DERMATOLOGIC SURGERY, vol. 37, no. 5, 27 January 2011 (2011-01-27), pages 637-643, XP055042976, ISSN: 1076-0512, DOI: 10.1111/j.1524-4725.2010.01852.x
- G Ary D. M Onheit ET AL: "Hyaluronic acid fillers", Dermatologic Therapy, 1 January 2006 (2006-01-01), pages 141-150, XP055042967, Retrieved from the Internet: URL:http://onlinelibrary.wiley.com/store/1 0.1111/j.1529-8019.2006.00068.x/asset/j.15 29-8019.2006.00068.x.pdf?v=1&t=h9179wg6&s= fe291d44f53b2e7486eef533dc33447dd3422d5f [retrieved on 2012-11-02]

## Description

### Field of invention

The present invention relates to the field of the cosmetic medicine and, more specifically, the injection products to be used for filling wrinkles and restoring volume to the face and body or as a bone tissue substitute, and it concerns a synthesis of an injectable multiphasic gel containing cross-linked monophasic hyaluronic acid, biphasic hyaluronic acid combined with hydroxyapatite and a microencapsulated hyaluronidase inhibitor that offers better tissue filling ability due to combination of biphasic hyaluronic acid with hydroxyapatite, its better distribution and adhesion in the tissues due to the presence of free and cross-linked monophasic hyaluronic acid and its longer time in situ due to the presence of a microencapsulated hyaluronidase inhibitor.

### Background

At present, a variety of syntheses of products for the correction of wrinkles and to give volume to the face are known in the field of cosmetic medicine, however without any of the said syntheses including a combination of multiphasic hyaluronic acid and hydroxyapatite and inhibition of slow-release hyaluronidase. In the same way, many bone fillers and bone inducers are known in the orthopaedic and dental field, however without combination of multiphasic hyaluronic acid and hydroxyapatite and inhibition of slow-release hyaluronidase.

Hyaluronic acid is a polysaccharide consisting of chains of thousands of saccharides made up of residues of glucuronic acid and N-acetylglucosamine and is one of the basic components of human connective tissues. Hydroxyapatite is a mineral belonging to the apatite group and is produced and absorbed by organic tissues and is the main mineral constituent of bone tissue.

The term hyaluronidase refers to a group of enzymes belonging to the class of hydrolases able to catalyse the hydrolysis of hyaluronic acid and to resolve it into its basic constituents that are glucuronic acid and N-Acetyl-D-glucosamine.

The injection products for the medical-cosmetic treatment of wrinkles and restoration of facial volume are aimed at performing a filling action, i.e. correcting facial imperfections so as to give a younger appearance.

The known products made with the current syntheses can be monophasic or biphasic, re-absorbable or permanent, but they do not have a synergic correlation of the action of monophasic hyaluronic acid with biphasic hyaluronic acid combined with hydroxyapatite and do not perform a slow-release hyaluronidase inhibiting action.

The term monophasic filler refers to a gel consisting of a single physical fluid (gelatinous) phase with no visible particles present.

The term biphasic Hyaluronic Acid based filler refers to a product containing a fluid phase usually made up of free hyaluronic acid and/or water and a solid particle phase made up of highly cross-linked and fragmented hyaluronic acid.

In the state of the art mentioned later in the present patent, the cross-linking of polysaccharides with high and low molecular weight for the formulation of a monophasic hydrogel is mentioned in patent WO/2004/092222 but, unlike the present invention, in the said prior invention no combination of multiphase gels with hydroxyapatite is described or claimed and no mention is made of hyaluronidase inhibitors.

The contemporaneous combination of a biphasic gel with hydroxyapatite and a monophasic gel, as described and claimed in the present invention, allows better distribution of a monophasic gel in the tissues and exploits the greater structural properties concerning the greater density, consistency and persistence of a biphasic filler combined with hydroxyapatite.

In patent WO 02/06350, a new method for the cross-linking of polysaccharides is described, in which, as in the present invention, there is hydration and cross-linking of hyaluronic acid at the same time by mixing it with an aqueous solution containing sodium hydroxide and BDDE (which stands for 1,4-butanediol diglycidyl ether) as the cross-linking agent.

The differences from the present application are that the gel obtained in the prior patent mentioned is preferentially monophasic and that no mention is made in it of combinations of the gel with hydroxyapatite or with slow-release hyaluronidase inhibitors.

The cross-linking of polysaccharides using BDDE and the combination with active substances incorporated in the structure of the cross-linked gel is mentioned in patent US 5827937, but in the said prior patent no mention is made of hydroxyapatite or of slow-release hyaluronidase inhibitors.

In patent US 7385052, the multiple cross-linking of hyaluronic acid using BDDE and other cross-linking agents is described with no mention of the multiphasic structure with hydroxyapatite or of hyaluronidase inhibitors.

In patent WO 2006/020994, a synthesis comprising hyaluronic acid, hydroxyapatite, a hyaluronidase inhibitor including ascorbic acid 6-hexadecanoate and lidocaine as anaesthetic is mentioned, but no mention is made of the multiphasic structure that is obtained by incorporating hydroxyapatite in biphasic hyaluronic acid as described and claimed in the present invention. The encapsulation of hydroxyapatite within particles of biphasic hyaluronic acid has the effect of considerably prolonging the duration of the product because degradation of the hydroxyapatite starts only when the previous process of degradation of the biphasic hyaluronic acid particles in which it is encapsulated finishes.

In patent WO 2005/051446, a composite multi-layer material comprising esterified hyaluronic acid and hydroxyapatite used as a bone tissue substitute for its regeneration is described and claimed, but no mention is made of the etherification of hyaluronic acid that guarantees its greater resistance to enzymatic degradation and neither is any mention made of the hyaluronidase inhibitor or of the multiphasic structure of the gel.

Compared to the above-mentioned invention, the hyaluronic acid cross-linked by means of BDDE together with the microencapsulated hyaluronidase inhibitor, as described and claimed in the present application, allows longer permanence of the product in situ to be obtained, so improving bone tissue regeneration.

In patent US 2007/0196426, mention is made of a new production process that allows a cohesive, polydensified, cross-linked monophasic gel to be obtained, but without the multiphasic structure, the combination with hydroxyapatite and the hyaluronidase inhibitor.

In patent US 2010/0041788 A1, a composition for tissue augmentation consisting of carboxymethylcellulose and hydroxyapatite is described with no mention of the multiphasic structure of the gel or of hyaluronidase inhibition. Compared to the above-mentioned invention, the incorporation of hydroxyapatite in hyaluronic acid particles and the presence of hyaluronidase inhibitor allow longer persistence of the product and a greater biocompatibility since hyaluronic acid is used instead of a cellulose derivative extraneous to the human body.

### Disclosure of invention

It is an object of the present invention to synthesise a formulation resulting from mixing cross-linked monophasic hyaluronic acid and biphasic hyaluronic acid combined with hydroxyapatite and a hyaluronidase inhibitor (Ascorbic Acid 6-Hexadecanoate incorporated in Alpha-Lecithin micelles) to be used for filling wrinkles and restoring volume to the face and body or as a bone substitute.

It is another object of the present invention to synergize the filling action and longer persistence of biphasic hyaluronic acid combined with hydroxyapatite with better distribution in the tissues of free and cross-linked monophasic hyaluronic acid and with the action of the hyaluronidase inhibitor to further increase the time the product stays in the injection site compared to currently known products.

It is a further object of the present invention to synthesis a product in which the hyaluronidase inhibitor is microencapsulated in micelles to protect it and slow its degradation.

### Detailed description

These and other objects are obtained by the synthesis that is the subject of the present invention consisting of a solution comprising water, as solubilizing and diluting medium, free hyaluronic acid having mainly a moisturizing action, cross-linked monophasic hyaluronic acid, which mainly performs a cohesive function, (particle) biphasic hyaluronic acid containing hydroxyapatite with mainly a filling and bone inducing action if it is used in bone tissues, ascorbic acid 6-hexadecanoate as hyaluronidase inhibitor, alpha-lecithin with emulsifying-microencapsulating function, lidocaine with anaesthetizing function.

This synthesis has allowed the following to be obtained:
a) better tissue filling capability due to the combination of biphasic hyaluronic acid with hydroxyapatite;
b) its better distribution and adhesion in the tissues due to the presence of free and cross-linked monophasic hyaluronic acid;
c) the longer time it stays in the site due to the presence of hydroxyapatite incorporated in biphasic gel particles and microencapsulated hyaluronidase inhibitor.

The synthesis that is the subject of the present invention is therefore a "basic solution" for the filling and correction of skin blemishes or as bone replacement in all cases where there is a deficiency of this tissue and can be used in combination with specific medical devices for the correction of facial and body wrinkles and volume or to replace bone tissue in variable concentrations according to the use to which it is to be put.

Its formulation requires the preparation of weighed quantities of the components, so as to obtain the required total mass, with the said components added one after the other, starting with the mixing of Hyaluronic Acid 1 million daltons with hyaluronic acid 2 million daltons and hydroxyapatite with a solution consisting of BDDE (1,4-butanediol diglycidyl ether), NaOH and water as solubilizer in a mixer at a temperature of between 20° and 25° C, mixing everything together for about 60 minutes at a speed of around 30 rpm and then heating the mass at 45°- 50° C for about 3 hours with mixing every 30 minutes, and then adding hydrochloric acid to stop the reaction and adjust the pH and mechanically crushing the polymer produced so as to obtain particles of approx. 100-200 microns and finally carrying out purification by dialysis. This procedure leads to the formation of a biphasic gel in which the particle part consists of cross-linked hyaluronic acid containing within it hydroxyapatite and the fluid part made up of water. The weighing of the components for the production of the monophasic part is carried out separately. These components are added one after the other, starting with the mixing of Hyaluronic Acid 1 million daltons with hyaluronic acid 2 million daltons with a solution consisting of BDDE (1,4-butanediol diglycidyl ether), NaOH and water as solubilizer in a mixer at a temperature of between 20° and 25° C, mixing everything together for about 15 hours at a speed of around 30 rpm, then adding hydrochloric acid to stop the reaction and adjust the pH and finally carrying out purification by dialysis.

Once the two solutions have been obtained, one monophasic and the other biphasic, they are mixed together in the following proportions:
from 50 to 70% biphasic solution and from 30 to 50% monophasic solution for bone replacement products;
from 5 to 20% biphasic solution and from 80 to 95% monophasic solution for tissue augmentation products;

A gelatinous solution consisting of water and free hyaluronic acid 500 k daltons, prepared separately at 10% of the final weight, is added to both the solutions obtained.

Finally, the microencapsulated hyaluronidase inhibitor and lidocaine are added with final homogenization.

The raw materials used and suitably modified in the present synthesis are:
- Hyaluronic acid that is the main component of the synthesis having the function of chemically binding to the cross-linking agent so as to form a polymer with optimal characteristics for skin filling or bone replacement, because it is plastic, biocompatible and highly moisturizing. Its concentration in the finished synthesis is between 1 and 4%.
- 1,4-butanediol diglycidyl ether (BDDE), whose function is to cross-link the hyaluronic acid molecules to slow their degradation.
- NaOH that has an alkalizing function to activate the hydroxyl groups and promote the cross-linking reaction, in a 0.25 molar aqueous solution.
- Hydroxyapatite, whose function is to increase the filling power of the solution and extend the time it stays in the tissues, and also, in the case where the solution is used as bone substitute, to promote the formation of new bone.
- Ascorbic acid 6-hexadecanoate, whose function is to inhibit hyaluronidase so slowing the degradation of hyaluronic acid and consequently extending the duration of the implant. Its concentration in the finished solution is between 0.1 and 0.5%.
- Alpha-lecithin having a hyaluronidase inhibitor protection action by forming microcapsules (micelles) inside which the inhibitor is located thanks to a micro-emulsifying process. Its concentration in the finished solution is between 0.1 and 0.5%.
- Lidocaine having an anaesthetizing action. Its concentration in the finished solution is between 0.3 and 0.4%.
- Phosphate buffer at pH 7.4 having a pH buffer action.

The described product may be used in the "pure" state with percentage quantities of biphasic, monophasic and free product depending on the action that it is planned to obtain.

In particular, a greater percentage quantity of biphasic gel combined with hydroxyapatite will be chosen if the product needs to be used for volume filling and for bone replacement; a higher percentage quantity of cross-linked monophasic gel and free hyaluronic acid will be chosen if the product needs to be used for the treatment and correction of more superficial imperfections. The objectives for use are directed mainly at the following:
- "Face", for restoring or increasing the volume of cheeks, lips, facial depressions, in order to obtain the correct volume balance.
- "Wrinkles and folds or scars" in order to obtain the filling of these and therefore a younger and more pleasing appearance.
- "Body" in order to fill depressions of various origin such as scars or stretch marks or for localized volume augmentation of breasts or other anatomical areas.
- "Bone cavities" in order to obtain the filling of these cavities and promote the formation of new bone.
- "Extracted tooth cavity" in order to promote the healing process and the formation of new tissue.
- Maxillary and mandibular "cystic cavities".
- "Elevation of the maxillary sinus".
- "bone cavities" in order to obtain the filling of these cavities and promote the formation of new bone.
- "Extracted tooth cavity" in order to promote the healing process and the formation of new tissue.
- Maxillary and mandibular "cystic cavities".
- "Elevation of the maxillary sinus".

## Claims

1. Synthesis of an injectable hyaluronic acid based gel wherein the formulation of a biphasic gel consists of the mixing of hyaluronic acid 1 million daltons with hyaluronic acid 2 million daltons and of hydroxyapatite with a solution consisting of BDDE (1,4-butanediol diglycidyl ether), NaOH and water as solubilizer in a mixer at a temperature of between 20° and 25° C for about 60 minutes at a speed of around 30 rpm and, after heating the mixed mass for about 3 hours up to 45°- 50° C with mixing every 30 minutes, hydrochloric acid is added to stop the reaction and adjust the pH, and then the polymer produced is mechanically crushed so as to obtain particles of approx. 100-200 microns and finally purification by dialysis is carried out,
and wherein
the formulation of the monophasic gel is obtained by the mixing of hyaluronic acid 1 million daltons with hyaluronic acid 2 million daltons with a solution consisting of BDDE (1,4-butanediol diglycidyl ether), NaOH and water as solubilizer in a mixer at a temperature of between 20° and 25° C, mixing everything together for about 15 hours at a speed of around 30 rpm, and adding hydrochloric acid to stop the reaction and adjust the pH and finally carrying out purification by dialysis and wherein
it is mixed in the following proportions:
= from 50 to 70% biphasic hyaluronic acid solution and from 50 to 30% monophasic hyaluronic acid solution for bone replacement products;
= from 5 to 20% biphasic hyaluronic acid solution and from 80 to 95% monophasic hyaluronic acid solution for tissue augmentation products and wherein
it is mixed with:
= a gelatinous solution consisting of water and free hyaluronic acid 500 k daltons prepared separately at 10% of the final weight,
= microencapsulated hyaluronidase inhibitor (ascorbic acid 6-hexadecanoate);
= lidocaine with final homogenization.

2. An injectable hyaluronic acid based gel produced by the method of claim 1.

## Patentansprüche

1. Herstellung eines injizierbaren Gels basierend auf Hyaluronsäure, wobei die Zusammensetzung von einem biphasischen Gel aus der Mischung von 1 Millionen Dalton Hyaluronsäure mit 2 Millionen Dalton Hyaluronsäure und Hydroxylapatit besteht, mit einer Lösung, welche sich aus BDDE (1,4-Butandiol Diglycidyl Ether), NaOH und Wasser als Lösungsvermittler in einem Mischer bei einer Temperatur von 20° bis 25°C für circa 60 Minuten bei einer Geschwindigkeit von rund 30 U/Min. zusammensetzt. Die Masse wird auf 45°-50°C erhitzt, für circa 3 Stunden alle 30 Minuten verrührt und unter Zugabe von Salzsäure wird die Reaktion gestoppt und der pH-Wert eingestellt. Anschließend wird das erzeugte Polymer mechanisch zerkleinert, um Partikel von ca. 100-200 µm zu erhalten und schließlich wird durch Dialyse die Reinigung durchgeführt,
wobei
die Zusammensetzung vom monophasischen Gel durch das Mischen von 1 Million Dalton Hyaluronsäure mit 2 Millionen Dalton Hyaluronsäure mit einer Lösung erhalten wird, welche aus BDDE (1,4-Butandiol Diglycidyl Ether), NaOH und Wasser als Lösungsvermittler besteht, die in einem Mischer bei einer Temperatur von 20° bis 25°C für circa 15 Stunden bei einer Geschwindigkeit von 30 U/Min. vermischt werden. Um die Reaktion zu stoppen, und den pH-Wert einzustellen wird Salzsäure hinzugefügt und schließlich wird durch Dialyse die Reinigung durchgeführt,
wobei
sie in den folgenden Proportionen gemischt wird:
= 50 bis 70% biphasische Hyaluronsäure-Lösung und 50 bis 30% monophasische Hyaluronsäure-Lösung für Knochenersatzpräparate;
= 5 bis 20% biphasische Hyaluronsäure-Lösung und 80 bis 95% monophasische Hyaluronsäure-Lösung für Gewebeaugmentationspräparate,
wobei
es gemischt wird mit:
= einer gelatineartigen Lösung bestehend aus Wasser und 500 k Dalton freier Hyaluronsäure, welche zu 10% vom Endgewicht separat hergestellt wird,
= mikroverkapseltem Hyaluronidase-Inhibitor (Ascorbinsäure 6-Hexadecanoat);
= Lidocain mit Abschlusshomogenisierung.

2. Ein injizierbares Gel basierend auf Hyaluronsäure, welches nach dem Verfahren gemäß Patentanspruch 1 hergestellt wird.

## Revendications

1. Synthèse d'un gel injectable à base d'acide hyaluronique, dans laquelle la préparation d'un gel biphasique consiste à mélanger, dans un mixeur, de l'acide hyaluronique d'1 million de daltons avec de l'acide hyaluronique de 2 millions de daltons, ainsi que de l'hydroxyapatite avec une solution constituée de BDDE (1,4-butanediol diglycidyl éther), de NaOH et d'eau servant d'agent solubilisant, à une température comprise entre 20° et 25° C pendant 60 minutes environ, à une vitesse de 30 tr/min environ ; ensuite, après avoir chauffé la masse mélangée pendant 3 heures environ à 45-50°C en remuant toutes les 30 minutes, de l'acide chlorhydrique est ajouté pour arrêter la réaction et ajuster le pH, puis le polymère obtenu est mécaniquement broyé de manière à obtenir des particules d'environ 100-200 microns, avant de faire enfin l'objet d'une purification par dialyse;
et dans laquelle
la préparation du gel monophasique est obtenue en mélangeant, dans un mixeur, de l'acide hyaluronique d'1 million de daltons avec de l'acide hyaluronique de 2 millions de daltons avec une solution constituée de BDDE (1,4-butanediol diglycidyl éther), de NaOH et d'eau servant d'agent solubilisant, à une température comprise entre 20° et 25° C, en mélangeant le tout pendant environ 15 heures à une vitesse de 30 tr/min environ, puis en ajoutant de l'acide chlorhydrique pour arrêter la réaction et ajuster le pH, avant d'effectuer enfin une purification par dialyse;
et dans laquelle
les proportions du mélange sont les suivantes:
= 50 à 70% de solution d'acide hyaluronique biphasique et 50 à 30% de solution d'acide hyaluronique monophasique pour les substituts osseux;
= 5 à 20% de solution d'acide hyaluronique biphasique et 80 à 95% de solution d'acide hyaluronique monophasique pour les produits de croissance des tissus;
et dans laquelle
la préparation est mélangée avec :
= une solution gélatineuse d'eau et d'acide hyaluronique libre de 500 kilodaltons préparée séparément à 10% du poids final,
= un inhibiteur de l'hyaluronidase microencapsulé (acide ascorbique 6-hexadécanoate) ;
= de la lidocaïne, avec une homogénéisation finale.

2. Un gel injectable à base d'acide hyaluronique produit selon la méthode de la revendication 1.
